# EUROPEAN PATENT APPLICATION

(11) **EP 1 850 203 A1**
(43) Date of publication of application: **31.10.2007**
(21) Application number: 06256530.4
(22) Date of filing: 21.12.2006
(51) Int. Cl.: G06F 1/00, H04L 29/06, H04L 12/28

(54) **Authentication network system**

(30) Priority: 10.04.2006 JP 2006107942
(71) Applicant: Fujitsu Ltd., Kawasaki-shi, Kanagawa 211-8588 (JP)
(72) Inventor: Somekawa, Jun c/o Fujitsu Limited, Kawasaki-shi Kanagawa 211-8588 (JP); Takaba, Koichi c/o Fujitsu Limited, Kawasaki-shi Kanagawa 211-8588 (JP)
(74) Representative: Stebbing, Timothy Charles

(57) **Abstract**

To provide a technology enabling establishment of compatibility between providing convenience for a user inputting authentication information and ensuring high security of a network. An authentication network system of the present invention is comprised so that: a first authentication device (1) receives first authentication information via a first network (LAN1) from a communication device (6), judges whether the first authentication information is authenticated or non-authenticated and, if the first authentication information is authenticated, notifies of the second authentication information; a second authentication device (2) receives the second authentication information, judges whether the second authentication information is authenticated or non-authenticated by comparing the second authentication information with information registered beforehand and, if the second authentication information is authenticated, notifies a connection control device (3) ; and the connection control device (3) switches over the connection of the authenticated communication device to a second network (LAN2) from the first network (LAN1).

## Description

The present invention relates to a technology of authenticating a terminal connected to a network.

Over the recent years, it has increasingly been important to ensure the security in a network such as a LAN (Local Area Network). Hence, for instance, such a technology has been proposed that a computer (PC: Personal Computer) seeking connection to the LAN is authenticated but can not be connected to the LAN unless it is a permitted PC. The IEEE802.1x standards give a definition of a technology of conducting the authentication when connected to the network.

In the case of carrying out this authentication, as a general rule, a user inputs necessary items of information for the authentication (authentication information) such as an ID and a password to the PC, and the PC transmits these items of information to an authentication server.

It is to be noted that operations (schemes) such as periodically changing the password, making the password difficult to guess and preventing the password from being stored in the terminal, are required for maintaining the security based on this authentication.

If these operations are set strictly, however, the convenience for the user is deteriorated though the security can be ensured.

Hence, there has been proposed a system, wherein an IC card or a USBmemory are stored with information such as an electronic certificate, and this information is read by the PC. For example, the PC reads this information from the IC card and the USB memory and, if validity of the information is authenticated, sends an ID and a password associated with this information to an authentication server.

Further, another system is that the PC reads biometric information of the user and, if validity of this biometric information is authenticated, sends an ID and a password associated with this information to the authentication server.

Moreover, technologies disclosed in the following Patent documents are given as the prior art related to the invention of the present application.
[Patent document 1] Japanese Patent Application Laid-Open Publication No.2003-218873
[Patent document 2] Japanese Patent Application Laid-Open Publication No.2004-133747

As described above, conducting authentication by using information on an IC card or biometric information of the user, requires a means for previously registering these pieces of information in each PC, then comparing the registered information with the readout information, and judging whether to authenticate or not.

Thus, if configured to register the information in each of the PCs, for example, on the occasion of registering and updating the information, it follows that the registering and updating operations are executed for each PC, and hence, if scaled up to a certain or greater degree, the management gets hard to do.

Another configuration is for managing in a centralized way the information of the IC card and the biometric information of the user by registering these items of information in a server on the network. However, if in the case of the network not being available till the authentication is completed as described above, the network is generally unutilizable when conducting the authentication, so that it is impossible to take the configuration for managing the biometric information to the server on the network. Namely, when conducting this authentication, it was unfeasible to communicate the biometric information etc without any restriction, though capable of communicating the information such as the ID and the password that are defined by an authentication protocol.

Such being the case, the present invention provides a technology of connecting a terminal to be connected to the network to, at first, a first network, authenticating first authentication information via the first network, notifying (by the user) of second authentication information in the case of authenticating validity of the first authentication information, and connecting the terminal to a second network in the case of authenticating the second authentication information.

The present invention adopts the following configurations.

Namely, an authentication network system according to the present invention is configured by connecting a first authentication device, a second authentication device and a connection control device via a network including a first network and a second network that are physically or logically different from each other,
the first authentication device comprising:
   a receiving unit receiving first authentication information via the first network from a communication device;
   an authentication unit comparing the first authentication information with information registered beforehand, and judging whether the first authentication information is authenticated or non-authenticated; and
   an authentication notifying unit notifying of (providing) the second authentication information if the first authentication information is authenticated,
the second authentication device comprising:
   a receiving unit receiving the second authentication information;
   an authentication unit comparing the second authentication information with information registered beforehand, and judging whether the second authentication information is authenticated or non-authenticated; and
   an authentication notifying unit notifying the connection control device if the second authentication information is authenticated,
the connection control device comprising:
   a connecting unit connecting the communication device before the authentication to the first network;
   a receiving unit receiving the notification of the authentication from the second authentication device; and
   a connection switchover unit switching over the connection of the communication device authenticated by the second authentication device to the second network from the first network.

In the authentication network system, the first authentication information may be biometric information of a user who uses the communication device, and the second authentication information may be identifying information and a password. The second authentication information may be supplied by the user.

The communication device may comprise:
a reading unit reading the first authentication information;
a first transmitting unit transmitting the thus-read first authentication information to the first authentication device via the first network;
a receiving unit receiving the second authentication information from the first authentication device;
a second transmitting unit transmitting the second authentication information to the second authentication device; and
a communication unit performing communications with other nodes via the network connected by the connection control device.

A connection control unit of the connection control device may switch over the connection of the communication device by changing setting of a port to which the communication device is connected.

Further, a connection control method according to the present invention is executed by an authentication network system configured by connecting a first authentication device, a second authentication device and a connection control device via a network including a first network and a second network that are physically or logically different from each other,
the first authentication device executing:
   a step of receiving first authentication information via the first network from a communication device;
   a step of comparing the first authentication information with information registered beforehand, and judging whether the first authentication information is authenticated or non-authenticated; and
   a step of notifying of the second authentication information if the first authentication information is authenticated,
the second authentication device executing:
   a step of receiving the second authentication information;
   a step of comparing the second authentication information with information registered beforehand, and judging whether the second authentication information is authenticated or non-authenticated; and
   a step of notifying the connection control device if the second authentication information is authenticated,
the connection control device executing:
   a step of connecting the communication device before the authentication to the first network;
   a step of receiving the notification of the authentication from the second authentication device; and
   a step of switching over the connection of the communication device authenticated by the second authentication device to the second network from the first network.

In the connection control method, the first authentication information maybe biometric information of a user who uses the communication device, and the second authentication information may be identifying information and a password.

In the connection control method, the communication device may execute:
a step of reading the first authentication information;
a step of transmitting the thus-read first authentication information to the first authentication device via the first network;
a step of receiving the second authentication information from the first authentication device;
a step of transmitting the second authentication information to the second authentication device; and
a step of performing communications with other nodes via the network.

In the connection control method, the connection control device may switch over the connection of the communication device by changing setting of a port to which the communication device is connected.

Moreover, a communication device according to the present invention is connected to an authentication network system configured by connecting a first authentication device, a second authentication device and a connection control device via a network including a first network and a second network that are physically or logically different from each other, the communication device comprising:
a reading unit reading the first authentication information;
a first transmitting unit transmitting the thus-read first authentication information to the first authentication device via the first network;
a receiving unit receiving the second authentication information from the first authentication device;
a second transmitting unit transmitting the second authentication information to the second authentication device; and
a communication unit performing communications with other nodes via the network connected by the connection control device.

In the communication device, the first authentication information may be biometric information of a user who uses the communication device, and the second authentication information may be identifying information and a password.

Further, a connection method according to the present invention is executed by a communication device connected to an authentication network system configured by connecting a first authentication device, a second authentication device and a connection control device via a network including a first network and a second network that are physically or logically different from each other, the connection method comprising:
a step of establishing a connection to the first network in accordance with control of the connection control device;
a step of reading the first authentication information;
a step of transmitting the thus-read first authentication information to the first authentication device via the first network;
a step of receiving the second authentication information from the first authentication device;
a step of transmitting the second authentication information to the second authentication device; and
a step of performing communications with other nodes via the network.

In the connection method, the first authentication information may be biometric information of a user who uses the communication device, and the second authentication information may be identifying information and a password.

Further, the present invention may be a program for making a computer execute the methods described above. Still further, the present invention may also be a readable-by-computer storage medium storing this program. The computer is made to read and execute the program on this storage medium, whereby functions thereof can be provided.

Herein, the readable-by-computer storage medium connotes a storage medium capable of storing information such as data, programs, etc electrically, magnetically, optically, mechanically or by chemical action, which can be read from the computer. Among these storage mediums, for example, a flexible disc, a magneto-optic disc, a CD-ROM, a CD-R/W, a DVD, a DAT, an 8 mm tape, a memory card, etc are examples of media demountable from the computer.

Further, a hard disc, a ROM (Read-Only Memory), etc are given as examples of storage media fixed within the computer.

According to the present invention, it is possible to provide the technology enabling the establishment of the compatibility between providing the convenience for the user who inputs the authentication information and ensuring the high security of the network.
Reference is made, by way of example only, to the accompanying drawings in which:
FIG. 1 is a schematic view of an authentication network system according to the present invention.
FIG.2 is a schematic diagram of a fingerprint authentication device (a first authentication device).
FIG. 3 is a schematic diagram of a RADIUS server (a second authentication device) .
FIG.4 is a schematic diagram of a router (a connection control device) .
FIG.5 is a schematic diagram of a terminal (a communication device).
FIG.6 is an explanatory diagram of a connection control method and a connection method according to the present invention.
FIG. 7 is a schematic view of the authentication network system according to a second embodiment of the present invention.

A best mode for carrying out the present invention will hereinafter be described with reference to the drawings. A configuration in the following embodiment is an exemplification, and the present invention is not limited to the configuration in the embodiment.

### <First Embodiment>

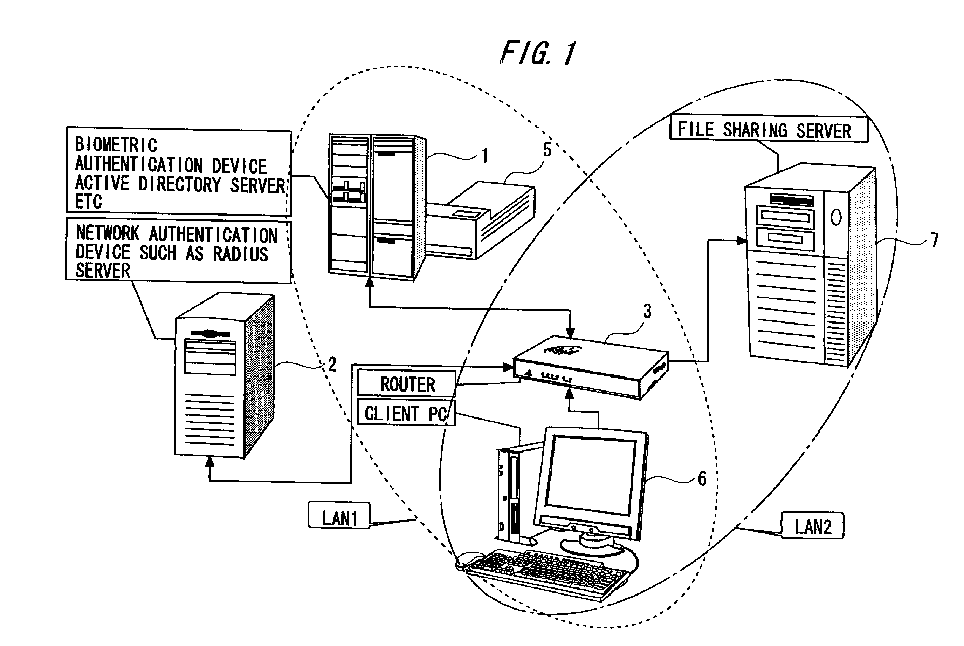

FIG. 1 is a schematic view of an authentication network system according to the present invention. An authentication network system 10 in the first embodiment is configured by a fingerprint authentication device (a first authentication device) 1, a RADIUS server (Remote Authentication Dial In User Service server: a second authentication device) 2, a router (a connection control device) 3, etc.

The authentication network system 10 in the first embodiment has a LAN 1 and a LAN 2, which are logically different from each other, owing to a function of VLAN (Virtual Local Area Network).

The LAN 1, to which the fingerprint authentication device 1, a network printer 5, etc belong, is an open network to which a terminal (a communication device) 6 before being authenticated is connected.

The LAN 2 is a network, to which an in-office file server 7 etc belongs, is a network to which the terminal 6 after being authenticated can be connected.

In the authentication network system 10 in the first embodiment, when the terminal 6 is connected, this terminal 6 is made to connect to, at first, the LAN 1. At this time, the terminal 6 is in a status of being able to communicate with the fingerprint authentication device 1 within the LAN 1 but unable to communicate with the device within the LAN 2. In this LAN 1, the terminal 6 sends fingerprint information (first authentication information) to the fingerprint authentication device 1 and, if authenticated, acquires a password defined as second authentication information.

Then, the terminal 6 sends this password and the identifying information (a user ID etc) to the RADIUS server 2, and, if authenticated, the router 3 switches over the connection of the terminal 6 to the LAN 2 from the LAN 1. With this switchover, the terminal 6 becomes able to utilize the in-office file server 7 etc.

Thus, the terminal 6 is kept unconnected to the in-office network (the LAN 2) till the authentication is completed, thereby ensuring the security. Further, the terminal 6 before being authenticated is connected to the network (LAN 1) in order to enable the authentication information of in office network to be acquired via the network, thus improving convenience to the user. Namely, the authentication network system 10 in the first embodiment has compatibility between ensuring the high security and improving the convenience to the user.

Next, an in-depth description of each of the components configuring the authentication network system 10 in the first embodiment will be explained.

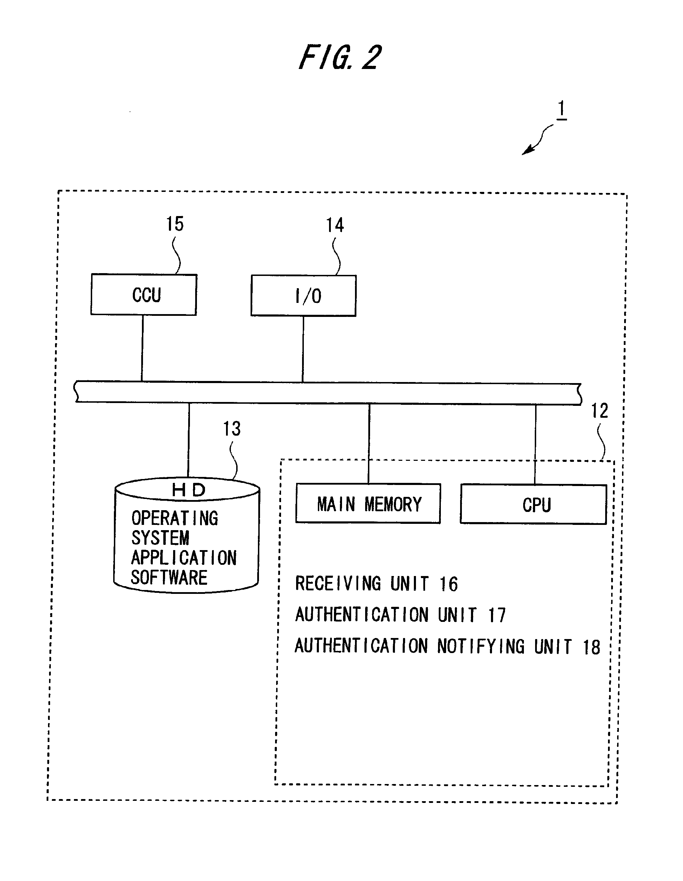

The fingerprint authentication device 1 is, as depicted in FIG. 2, a general type of computer including an arithmetic processing unit 12 constructed of a CPU (Central Processing Unit), a main memory, etc, a storage unit (hard disc) 13 storing data and software for the arithmetic process, an input/output port 14, a communication control unit (CCU) 15 and so on.

The CCU 15 controls communications with other computers via the network.

The storage unit 13 is preinstalled with operating system (OS) and application software. Further, the storage unit 13 registers individual user IDs, fingerprint authentication information, passwords (second authentication information) in a way that associates these items of information with each other.

The arithmetic processing unit 12 properly reads the OS and the application program from the storage unit 13 and executes the OS and the application program, and carries out the arithmetic process of the information inputted from the I/O port 14 and the CCU 15 and the information read from the storage unit 13, thereby functioning also as a receiving unit 16, an authentication unit 17 and an authentication notifying unit 18.

The receiving unit 16 receives the fingerprint information defined as the first authentication information and the user ID via the LAN 1 from each of the terminals 6.

The authentication unit 17 reads the fingerprint information associated with the user ID from the storage unit 13, then compares the readout fingerprint information with the received fingerprint information, and judges that the user (fingerprint information) is authenticated if coincident with each other but is not authenticated if not coincident.

The authentication notifying unit 18, when the authentication unit 17 authenticates the fingerprint information, reads the password associated with the user ID from the storage unit 13, and notifies the terminal 6 of the password (i.e. transmits the password to the terminal 6).

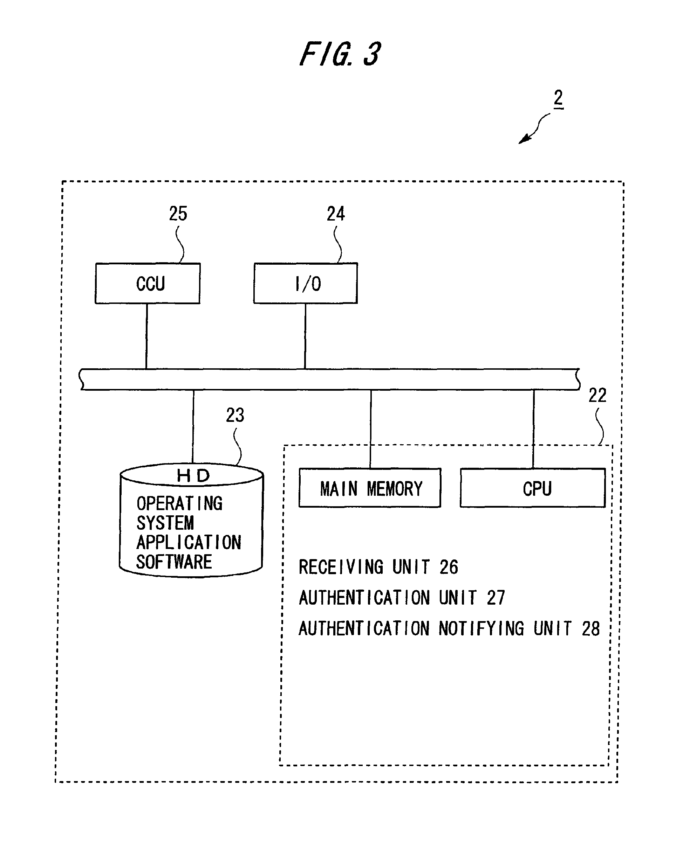

Further, the RADIUS server 2 is, as illustrated in FIG. 3, a computer including an arithmetic processing unit 22 constructed of a CPU (Central Processing Unit), a main memory, etc, a storage unit (hard disc) 23 stored with data and software for arithmetic processing, an input/output port 24, a communication control unit (CCU) 25 and so on.

The storage unit 23 is preinstalled with the operating system and the application software and registers the user IDs and the passwords in a way that associates these items of information with each other.

The arithmetic processing unit 12 properly reads the OS and the application program from the storage unit 23 and executes the OS and the application program, and carries out arithmetic processing of the information inputted from the I/O port 24 and the CCU 25 and the information read from the storage unit 23, thereby functioning also as a receiving unit 26, an authentication unit 27 and an authentication notifying unit 28.

The receiving unit 26 receives the password defined as the second authentication information and the user ID from the terminal 6.

The authentication unit 27 compares the received password with the password registered in the storage unit 13, and judges that the user (password) is authenticated if they coincide but is not authenticated otherwise.

The authentication notifying unit 28 notifies the router 3 of the information showing a result of the authentication by the authentication unit 27, which is, i.e., an authenticated or non-authenticated status.

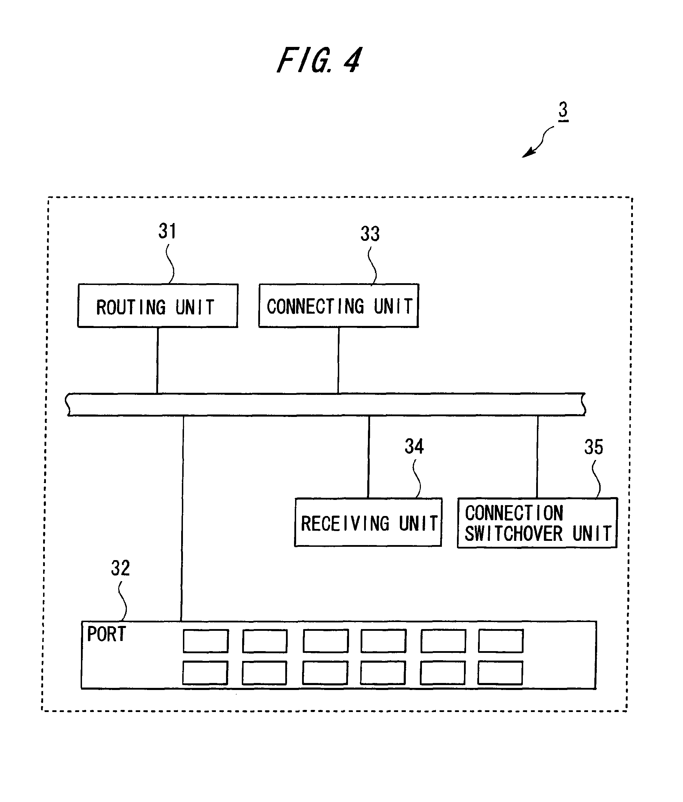

Further, the router 3 in the first embodiment has, as shown in FIG. 4, a LAN switch function and includes, as illustrated in FIG. 4, a routing unit 31, a port 32, a connecting unit 33, a receiving unit 34 and a connection switchover unit 35.

The routing unit 31 routes a frame sent from the terminal 6, corresponding to a destination address.

The port 32 is a connector, for connecting a cable of each terminal 6, via which the terminal 6 is connected to the network, i.e., the LAN 1 or the LAN 2 associated with the LAN number in the first embodiment.

The connecting unit 33 sets the LAN number in the port 32 and determines the LAN to which the terminal 6 is connected. For example, the connecting unit 33, when the terminal 6 is connected to the port 32, sets a VLAN number "1" in the port 32 and thus connects the terminal 6 to the LAN 1.

The receiving unit 34 receives, from the RADIUS server 2, notification, i.e., a result of authentication showing whether the terminal 6 is authenticated or not.

The connection switchover unit 35 notifies the connecting unit 33 of the VLAN number of the network to which the terminal 6 is connected corresponding to the notification sent from the RADIUS server 2 and received by the receiving unit 34. For instance, in the case of receiving the information notifying that the terminal 6 is authenticated, the connection switchover unit 35 notifies the connecting unit 33 of a VLAN number "2" and switches over the connection of the terminal 6 to the LAN 2 from the LAN 1.

Note that the judgment as to which subnetwork (the LAN 1, the LAN 2) the terminal 6 is connected to may be made by the RADIUS server (the second authentication device) 2. For example, the RADIUS server 2 provides the storage unit 23 with the user ID, the password and the connecting information (which is the VLAN number in the first embodiment) specifying the network to which the terminal 6 is connected after being authenticated in a way that associates these items of information with each other, and, if the terminal 6 is authenticated for the connection, notifies the router (a connection control device) 3 of the connecting information (the VLAN number) as a result of this authentication. In this case, the connection switchover unit 35 of the router 3 may transfer this VLAN number to the connecting unit 33.

Further, in the first embodiment, the connection control device is exemplified by the router and may also be, if having the functions of the port 32, the connecting unit 33, the receiving unit 34 and the connection switchover unit 35 without being limited to the router, a LAN switch and a layer-3 switch.

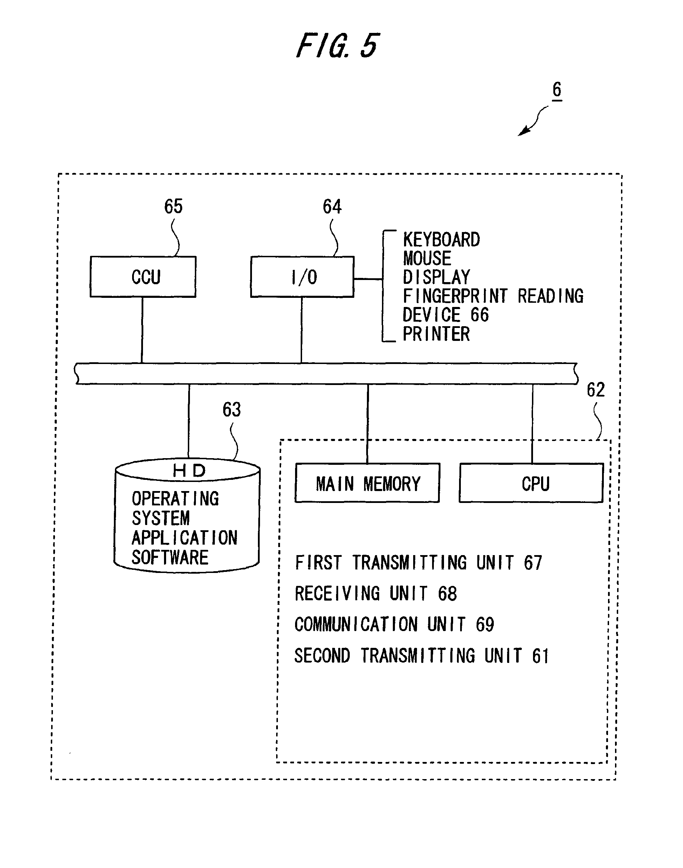

Then, the terminal (the communication device) 6 is, as illustrated in FIG. 5, a general-purpose computer including an arithmetic processing unit 62 constructed of a CPU (Central Processing Unit), a main memory, etc, a storage unit (hard disc) 63 holding data and software for arithmetic processing, an input/output port 64, a communication control unit (CCU) 65 and so on.

Connected as necessary to the I/O port 64 are input devices such as a keyboard, a mouse, a fingerprint reading device 66, a CD-ROM drive, etc and output devices such as a display device, a printer, etc. The fingerprint reading device 66 reads the fingerprint information from a finger of the user. It should be noted that the first authentication information involves using the fingerprint information in the first embodiment and may also be, without being limited to the fingerprint, biometric information of a vein pattern, an iris pattern, a voice print, etc and data such as an electronic certificate etc.

The CCU 65 controls the communications with other computers via the network.

The storage unit 63 is preinstalled with the operating system (OS) and application software (programs such as a PC authentication module and a network authentication module).

The arithmetic processing unit 62 reads the OS and the application program from the storage unit 63 and executes the OS and the application program, and carries out the arithmetic process of the information inputted from the I/O port 64 and the CCU 65 and the information read from the storage unit 13, thereby functioning also as a transmitting unit 67, a receiving unit 68 and a communication unit 69. It should be noted that the first transmitting unit 67, the communication unit 69 and the receiving unit 68 are actualized by executing a PC authentication module (which is also referred to as a program or a program module), and a second transmitting unit 61 is actualized by executing a network authentication module (which is also referred to as a program or a program module).

The first transmitting unit 67 transmits the fingerprint information (the first authentication information) read by the fingerprint reading device 66 and the user ID to the fingerprint authentication device 1 via the LAN 1.

The receiving unit 68 receives, when the fingerprint information is authenticated, the user ID and the password defined as the second authentication information from the fingerprint authentication device 1.

The communication unit 69 performs communications with other nodes via the network connected by the router 3.

The second transmitting unit 61 transmits the user ID and the password, which are acquired from the fingerprint authentication device 1, to the RADIUS server 2.

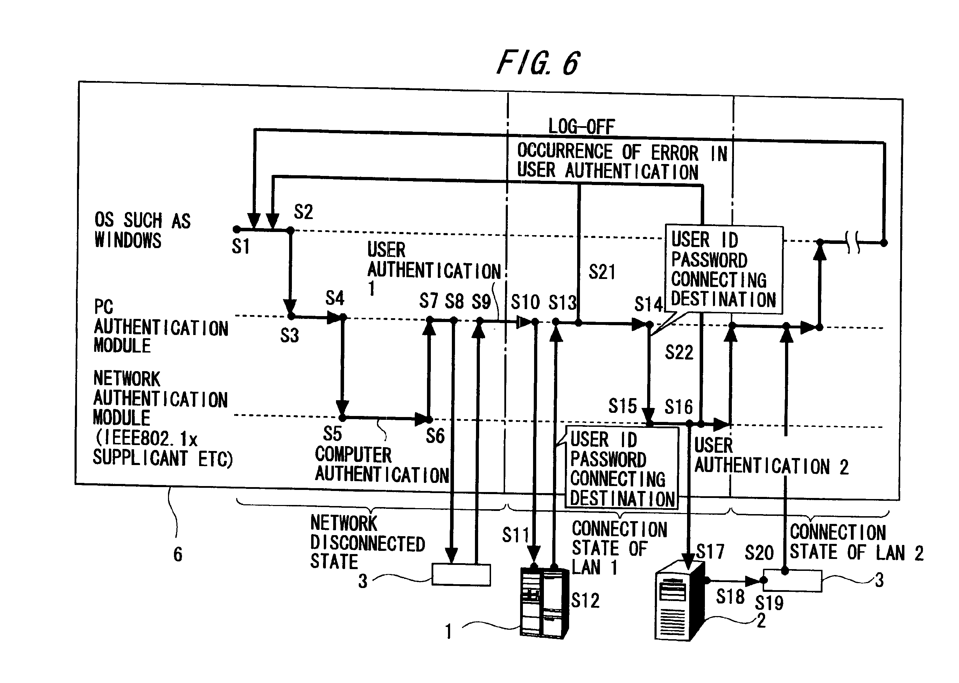

A connection control method in the thus-configured authentication network 10 and a connection method in the terminal 6 will be explained with reference to FIG. 6.

In a state where a cable is connected to the port 32 of the router 3 from the terminal 6, when a power source of the terminal 6 is switched ON (step 1, which will hereinafter be abbreviated such as S1), a log-on screen for the user is at first displayed on the display device by booting the OS (S2).

When the user ID and the password are inputted from on the log-on screen, the first transmitting unit 67 of the PC authentication module displays a message prompting the user to input the fingerprint information on the display device. In response to this event, when the user sets a fingerprint reading operation, the fingerprint reading device 66 reads and transmits the fingerprint information to the first transmitting unit 67 (S3).

The first transmitting unit 67 of the PC authentication module transfers the user ID and the fingerprint information to the network authentication module (S4). The second transmitting unit 61 of the network authentication module compares the user ID, the fingerprint information and information unique to the terminal (such as a MAC (Media Access control) address and an ID of the CPU) with these items of information registered beforehand in the storage unit 63 etc, thereby judging whether the terminal 6 is valid or not (S5) . If the terminal 6 is judged to be invalid in this computer authentication, the second transmitting unit 61 suspends the connection to the LAN 1 and returns to the log-on screen in step 2. Namely, the terminal 6 is unable to log on to the OS and cannot therefore use the PC. Whereas if the terminal 6 is judged valid, the processing returns to the PC authentication module, and the authentication process continues (S6) .

The first transmitting unit 67 of the PC authentication module, when receiving a result of the judgment that the terminal 6 is valid (S7), requests the router 3 for the connection. For instance, when the terminal 6 requests an IP address (S8), the router 3 assigns the IP address for the LAN 1 thereto (S9).

Then, the first transmitting unit 67 transmits the user ID and the fingerprint information to the fingerprint authentication device 1 via the LAN 1 (S10), wherein the user authentication 1 is conducted.

The fingerprint authentication device 1 receiving the user ID and the fingerprint information reads the fingerprint information associated with the user ID from the storage unit 13, and compares the received fingerprint information with the readout fingerprint information (S11). If these pieces of fingerprint information are coincident with each other, the fingerprint authentication device 1 authenticates the user and notifies the terminal 6 of the user ID, the password and the connecting destination (address) as a result of the authentication (S12) . Note that this user ID may be the same as and may also be differentiated from an ID for logging on to the OS. Moreover, whereas if these pieces of fingerprint information are not coincident with each other, the fingerprint authentication device 1 notifies the terminal 6 of an authentication result indicating the user as being non-authenticated.

The terminal 6 authenticated by the fingerprint authentication device 1 and receiving the authentication result (S13) transfers the user ID, the password and the connecting destination as the authentication result to the network authentication module (S14). The second transmitting unit 61 receiving these pieces of information transmits the user ID and the password to the RADIUS server 2 as the connecting destination, wherein the user authentication 2 is conducted (S15, S16).

When the receiving unit 26 receives the user ID and the password, in the RADIUS server 2, the authentication unit 27 reads the password associated with the user ID from the storage unit 23 and compares this readout password with the received password (S17). If these passwords are coincident with each other, the authentication notifying unit 28 sends a notification that the user has been authenticated (the authentication result) and the terminal identifying information (e.g., an address) to the router 3 (S18). Further, the authentication notifying unit 28, if these passwords are not coincident, notifies the terminal 6 of the authentication result of non-authenticated.

In the router 3, when the receiving unit 34 receives this authentication result, the connection switchover unit 35 notifies the connecting unit 33 of the VLAN number in accordance with the authentication result (S19). The connecting unit 33 sets the VLAN number in the port towhichthe terminal 6 specified by the identifying information is connected. For instance, in the case of receiving the information that the terminal 6 is authenticated, the connection is switched over to the LAN 2 from the LAN 1 by notifying the connecting unit 33 of the VLAN number "2". Note that if non-authenticated, the terminal 6 shall remain connected to the LAN 1 without notifying the connecting unit 33.

Further, the router 3, in the case of switching over the connection of the terminal 6 to the LAN 2, assigns a LAN 2 based IP address to the terminal 6 (S20).

With this address assignment, the terminal 6 connects to the LAN 2 and becomes able to utilize the in-office file server 7 etc. It is to be noted that when resulting in being non-authenticated in the user authentication 1 and in the user authentication 2, the processing returns to the log-on screen in step 2 (S21, S22).

Thus, in the first embodiment, the user is authenticated based on the fingerprint information, and the terminal is connected to the network (the LAN 2) for business use only when authenticated but is not connected to the network for the business use if not authenticated. This scheme makes it compatible to provide convenience for the user who inputs the authentication information (the fingerprint information) and to ensure the high security of the network.

Moreover, in the first embodiment, the authentication device provided on the network (the LAN 1) for the authentication authenticates the fingerprint information, thereby enabling the fingerprint information to be managed in a centralized manner and maintainability to be improved. In particular, the authentication information is sent to the authentication device in a status of enabling the network (the LAN 1) to be utilized, and hence arbitrary information can be sent without being limited to an authentication protocol such as EAP (Extensible Authentication Protocol), whereby a degree of freedom is improved.

Note that in the first embodiment, the terminal becoming non-authenticated in the user authentication is, after getting back to the log-on screen, set unutilizable, however, the terminal becoming non-authenticated may log on to the OS while being connected to the LAN 1 and may thus be set able to use the printer 5 and accessible to the Internet.

Similarly, in the case of connecting a guest's PC (terminal) having neither the PC authentication module nor the network authentication module according to the present invention, only the LAN 1 may be set utilizable by assigning the IP address for the LAN 1 without conducting the authentication.

### <Second Embodiment>

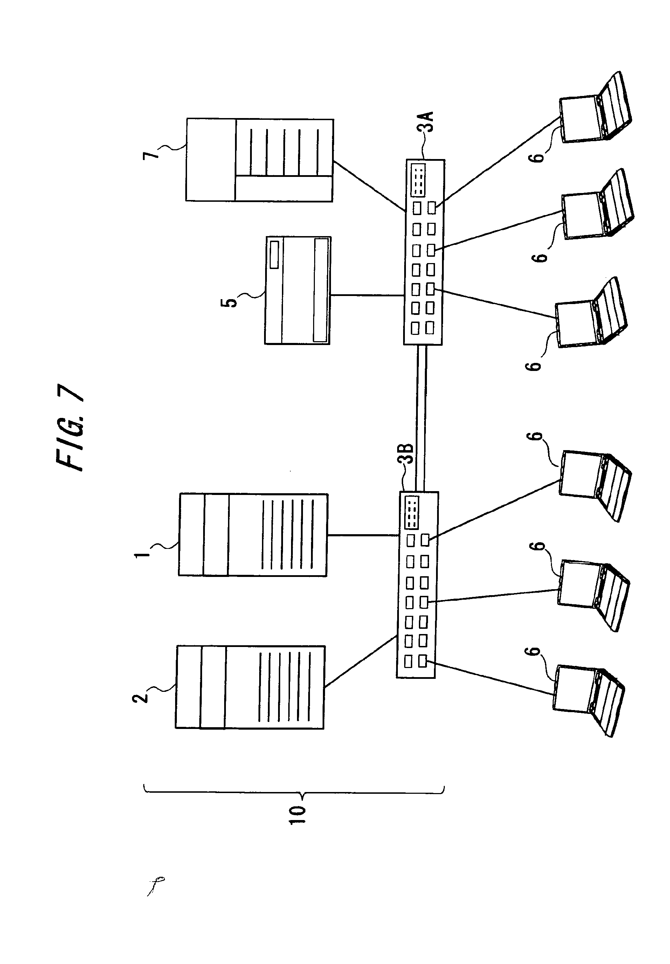

FIG. 7 is a schematic view of the authentication network system in a second embodiment according to the present invention. The second embodiment differs from the first embodiment described above in using a plurality of LAN switches as the connection control devices. Other configurations are substantially the same, and therefore repeated explanation is omitted by marking the same components with the same numerals and symbols.

Each of the LAN switches 3A, 3B includes the port 32, the connecting unit 33 and the receiving unit 34 and the connection switchover unit 35 described above.

With this configuration, as in the first embodiment discussed above, when the terminal 6 connected to the ports 32 of the respective LAN switches 3A, 3B logs on, the user authentication 1 and the user authentication 2 are carried out. Then, when receiving from the RADIUS server 2 the information that terminal 6 is authenticated, the connection switchover unit 35 causes the connecting unit 33 to set the port 32 for the terminal 6 to the LAN number "2", thereby switching over the terminal 6 to the LAN 2.

Note that between these LAN switches 3A, 3B, the respective networks (the LAN 1, the LAN 2) may also be distinguished from each other by inserting a 4-byte VLAN tag defined by IEEE802.1Q into a header field of the MAC frame.

Also in the case of thus configuring the plurality of LAN switches, as in the first embodiment described above, the user authentication is conducted, and it is possible to switch over the network to which the terminal is connected.

<Others>
The present invention is not limited to only the illustrated examples given above and can be, as a matter of course, changed in a variety of forms in the range that does not deviate from the present invention.

## Claims

1. An authentication network system comprised by connecting a first authentication device, a second authentication device and a connection control device via a network including a first network and a second network that are physically or logically different from each other,
the first authentication device comprising:
a receiving unit for receiving first authentication information via the first network from a communication device;
an authentication unit for comparing the first authentication information with information registered beforehand, and judging whether the first authentication information is authenticated or non-authenticated; and
an authentication notifying unit for notifying of the second authentication information if the first authentication information is authenticated,
the second authentication device comprising:
a receiving unit for receiving the second authentication information;
an authentication unit for comparing the second authentication information with information registered beforehand, and judging whether the second authentication information is authenticated or non-authenticated; and
an authentication notifying unit for notifying the connection control device if the second authentication information is authenticated,
the connection control device comprising:
a connecting unit for connecting the communication device before the authentication to the first network;
a receiving unit for receiving the notification of the authentication from the second authentication device; and
a connection switchover unit for switching over the connection of the communication device authenticated by the second authentication device to the second network from the first network.

2. An authentication network system according to Claim 1, wherein the first authentication information is biometric information of a user who uses the communication device, and
the second authentication information is identifying information and a password.

3. An authentication network system according to Claim 1 or 2, wherein the communication device comprises:
a reading unit for reading the first authentication information;
a first transmitting unit for transmitting the thus-read first authentication information to the first authentication device via the first network;
a receiving unit for receiving the second authentication information from the first authentication device;
a second transmitting unit for transmitting the second authentication information to the second authentication device; and
a communication unit for performing communications with other nodes via the network connected by the connection control device.

4. An authentication network system according to any one of Claims 1 to 3, wherein a connection control unit of the connection control device switches over the connection of the communication device by changing setting of a port to which the communication device is connected.

5. A connection control device connected to a first authentication device, a second authentication device and a communication device via a network including a first network and a second network that are physically or logically different from each other, comprising:
a connecting unit for connecting the communication device before the authentication to the first network;
a receiving unit for receiving the notification of the authentication from the second authentication device; and
a connection switchover unit for switching over the connection of the communication device authenticated by the second authentication device to the second network from the first network.

6. A connection control device according to Claim 5, wherein the connection control unit is arranged to switch over the connection of the communication device by changing the setting of the port to which communication device is connected.

7. A connection control method executed by an authentication network system comprised by connecting a first authentication device, a second authentication device and a connection control device via a network including a first network and a second network that are physically or logically different from each other,
the first authentication device executing:
a step of receiving first authentication information via the first network from a communication device;
a step of comparing the first authentication information with information registered beforehand, and judging whether the first authentication information is authenticated or non-authenticated; and
a step of notifying of the second authentication information if the first authentication information is authenticated,
the second authentication device executing:
a step of receiving the second authentication information;
a step of comparing the second authentication information with information registered beforehand, and judging whether the second authentication information is authenticated or non-authenticated; and
a step of notifying the connection control device if the second authentication information is authenticated,
the connection control device executing:
a step of connecting the communication device before the authentication to the first network;
a step of receiving the notification of the authentication from the second authentication device; and
a step of switching over the connection of the communication device authenticated by the second authentication device to the second network from the first network.

8. A connection control method according to Claim 7, wherein the first authentication information is biometric information of a user who uses the communication device, and
the second authentication information is identifying information and a password.

9. A connection control method according to Claim 7 or 8, wherein the communication device executes:
a step of reading the first authentication information;
a step of transmitting the thus-read first authentication information to the first authentication device via the first network;
a step of receiving the second authentication information from the first authentication device;
a step of transmitting the second authentication information to the second authentication device; and
a step of performing communications with other nodes via the network.

10. A connection control method according to any one of Claims 7 to 9, wherein the connection control device switches over the connection of the communication device by changing setting of a port to which the communication device is connected.

11. A connection control method executed by a connection control device connected to a first authentication device, a second authentication device and a communication device via a network including a first network and a second network that are physically or logically different from each other, comprising:
a step of connecting the communication device before the authentication to the first network;
a step of receiving the notification of the authentication from the second authentication device; and
a step of switching over the connection of the communication device authenticated by the second authentication device to the second network from the first network.

12. A connection control method according to Claim 11, wherein the connection of the communication device is switched over by changing the setting of the port of the connection control device, to which communication device is connected.

13. A connection control program executed by a connection control device connected to a first authentication device, a second authentication device and a communication device via a network including a first network and a second network that are physically or logically different from each other, comprising:
a step of connecting the communication device before the authentication to the first network;
a step of receiving the notification of the authentication from the second authentication device; and
a step of switching over the connection of the communication device authenticated by the second authentication device to the second network from the first network.

14. A communication device connected to an authentication network system comprised by connecting a first authentication device, a second authentication device and a connection control device via a network including a first network and a second network that are physically or logically different from each other, comprising:
a reading unit for reading the first authentication information;
a first transmitting unit for transmitting the thus-read first authentication information to the first authentication device via the first network;
a receiving unit for receiving the second authentication information from the first authentication device;
a second transmitting unit for transmitting the second authentication information to the second authentication device; and
a communication unit for performing communications with other nodes via the network connected by the connection control device.

15. A communication device according to Claim 14, wherein the first authentication information is biometric information of a user who uses the communication device, and
the second authentication information is identifying information and a password.

16. A connection method executed by a communication device connected to an authentication network system comprised by connecting a first authentication device, a second authentication device and a connection control device via a network including a first network and a second network that are physically or logically different from each other, comprising:
a step of establishing a connection to the first network in accordance with control of the connection control device;
a step of reading the first authentication information;
a step of transmitting the thus-read first authentication information to the first authentication device via the first network;
a step of receiving the second authentication information from the first authentication device;
a step of transmitting the second authentication information to the second authentication device; and
a step of performing communications with other nodes via the network.

17. A connection method according to Claim 16, wherein the first authentication information is biometric information of a user who uses the communication device, and
the second authentication information is identifying information and a password.

18. A program executed by a communication device connected to an authentication network system comprised by connecting a first authentication device, a second authentication device and a connection control device via a network including a first network and a second network that are physically or logically different from each other, comprising:
a step of establishing a connection to the first network in accordance with control of the connection control device;
a step of reading the first authentication information;
a step of transmitting the thus-read first authentication information to the first authentication device via the first network;
a step of receiving the second authentication information from the first authentication device;
a step of transmitting the second authentication information to the second authentication device; and
a step of performing communications with other nodes via the network.

19. A program executed by a communication device connected to an authentication network system comprised by connecting a first authentication device, a second authentication device and a connection control device via a network including a first network and a second network that are physically or logically different from each other, comprising:
a step of establishing a connection to the first network in accordance with control of the connection control device;
a step of reading the first authentication information;
a step of transferring the thus-read first authentication information to a program module that transmits the first authentication information to the first authentication device via the first network;
a step of receiving the second authentication information from the first authentication device;
a step of trans ferring the second authentication information to a program module that transmits the second authentication information to the second authentication device; and
a step of performing communications with other nodes via the network.
